# EUROPÄISCHE PATENTSCHRIFT

(11) **EP 1 564 107 B1**
(45) Veröffentlichungstag und Bekanntmachung des Hinweises auf die Patenterteilung: **12.09.2007**
(21) Anmeldenummer: 05075255.9
(22) Anmeldetag: 01.02.2005
(51) Int. Cl.: B62D 1/04, B60R 21/01

(54) **Lenkrad für ein kraftfahrzeug**
Vehicle steering wheel
Volant d'un véhicule

(30) Priorität: 10.02.2004 DE 102004007253
(43) Veröffentlichungstag der Anmeldung: 17.08.2005
(73) Patentinhaber: Takata-Petri AG, 63743 Aschaffenburg (DE)
(72) Erfinder: Weber, Helmuth, 63739 Aschaffenburg (DE); Müller, Horst, 61197 Florstadt (DE)
(74) Vertreter: Maikowski, Michael

(56) Entgegenhaltungen:
- EP-A- 0 545 497
- DE-A1- 4 023 109
- GB-A- 2 171 547
- US-A- 4 340 813
- US-A- 4 706 072
- US-A- 5 446 661
- US-A- 5 769 085
- US-A1- 2003 086 588

## Beschreibung

Die Erfindung betrifft ein Lenkrad für ein Kraftfahrzeug gemäß dem Oberbegriff des Anspruchs 1. Ferner betrifft die Erfindung ein Verfahren unter Verwendung eines derartigen Lenkrades.

Aus dem Stand der Technik sind Kraftfahrzeug-Lenkräder mit einem Nabenkörper, einem Lenkradkranz, mindestens einer Lenkradspeiche zur Befestigung des Lenkradkranzes am Nabenkörper und mindestens einer am Nabenkörper, am Lenkradkranz oder an der Lenkradspeiche angeordneten Betätigungsvorrichtung zum Steuern und/oder Regeln eines Parameters einer Baugruppe eines Kraftfahrzeuges bekannt, wobei die mindestens eine Betätigungsvorrichtung des Lenkrads als reflexionsoptische Sensoreinrichtung ausgebildet ist.

Dadurch, dass Betätigungsvorrichtungen am Lenkrad selbst angeordnet sind, wird der Kraftfahrzeugführer während des Fahrens in die Lage versetzt, verschiedene Parameter von Baugruppen des Kraftfahrzeuges steuern und/oder regeln zu können, ohne dabei die Hände vom Lenkrad nehmen zu müssen. Dies stellt einen wichtigen Beitrag zur Fahrzeugsicherheit dar.

Übliche Parameter von Kraftfahrzeug-Baugruppen, die mittels Betätigungsvorrichtungen steuer- und/oder regelbar sind, umfassen beispielsweise Funktionsparameter der Musikanlage, der Klimaanlage, des Navigationssystems und der Freisprechanlage eines Mobiltelefons. Grundsätzlich ist jedoch das Steuern und/oder Regeln sämtlicher Baugruppen sinnvoll und möglich, deren Bedienelemente so weit vom Lenkrad entfernt sind, dass für deren Bedienung das Loslassen einer Hand vom Lenkrad zwingend notwendig ist.

Aus der US 2003/0086588 A1, die alle Merkmale des Oberbegriffs des Anspruchs 1 offenbart, ist ein Lenkrad mit einer Vorrichtung zur Identifizierung und Autorisierung eines Fahrers bekannt. Die Vorrichtung ist derart am Lenkrad angeordnet, dass Sie ein Venenmuster des Fahrers erfassen kann, wenn dieser das Lenkrad zum Bedienen des Lenkrades ergreift, wobei das Lenkrad des Weiteren dazu ausgebildet ist, Informationen bezüglich der Identifikation des Fahrers anzuzeigen.

An den bisherigen Betätigungsvorrichtungen ist zum einen nachteilig, dass diese aufgrund ihrer mechanischen Bauelemente eine Kraft-Weg-Kennlinie aufweisen und somit mechanischem Verschleiß unterliegen. Dadurch kann es im Laufe der Lebensdauer eines Kraftfahrzeuges zu Beeinträchtigungen und Störungen der Funktion dieser Betätigungsvorrichtungen kommen. Zum anderen erfüllt jede Betätigungsvorrichtung ausschließlich die ihr fest zugeordnete Funktion des lenkradseitigen Steuerns und/oder Regelns eines Parameters einer Kfz-Baugruppe durch den Fahrzeugführer. Sollen weitere Funktionen realisiert werden, so sind üblicherweise weitere dafür vorgesehene Vorrichtungen erforderlich.

Eine Aufgabe der vorliegenden Erfindung ist es, ein Lenkrad mit mindestens einer Betätigungsvorrichtung bereitzustellen, wobei die Betätigungsvorrichtung über die gesamte Lebensdauer des Kraftfahrzeuges eine wartungsfreie und zuverlässige Funktion ohne im Laufe der Betriebsdauer zunehmende Beeinträchtigungen aufweist. Eine weitere Aufgabe der Erfindung besteht darin, ein Lenkrad mit mindestens einer Betätigungsvorrichtung bereitzustellen, das neben der Funktion des Steuerns und/oder Regelns eines Parameters einer Kfz-Baugruppe durch den Fahrzeugführer mindestens eine weitere Funktionalität integriert und somit eine einfachere und kostengünstigere Herstellung ermöglicht.

Diese Aufgaben werden durch ein Lenkrad mit den Merkmalen des Anspruchs 1 gelöst, sowie durch ein Verfahren gemäß Anspruch 24.

Erfindungsgemäß ist vorgesehen, die Funktionsfläche mindestens einer Sensoreinrichtung in einer Vertiefung im Lenkrad anzuordnen. Die Vertiefung ist dabei derart ausgebildet, dass eine ungewollte Berührung der Funktionsfläche durch die Hände des Fahrzeugführers beim Lenkvorgang ausgeschlossen ist. Dies ist insbesondere dann sinnvoll, wenn die Funktionsflächen in solchen Bereichen des Lenkrads angeordnet sind, die der Fahrzeugführer beim Lenkvorgang üblicherweise mit seinen Händen berührt.

Derartige reflexionsoptische Sensoreinrichtungen weisen eine Funktionsfläche auf, die für das Licht einer Sendelichtquelle - üblicherweise eine Infrarot-LED - transparent ausgebildet ist. Eine Detektoreinrichtung detektiert und analysiert die Anteile des Sendelichts, die zum einen beim Durchtreten der Funktionsfläche und durch ein oberhalb oder auf der Funktionsfläche befindliches Objekt reflektiert werden.

Ausgereifte derartige Sensoreinrichtungen, wie beispielsweise das HALIOS-System des Herstellers ELMOS weisen eine zusätzliche Kompensationslichtquelle auf, die identisch moduliert aber phasenverschoben zur Sendelichtquelle betrieben wird und ein zweites Signal ohne Wechselwirkung mit der Funktionsfläche oder äußeren Objekten mittels der gleichen Detektoreinrichtung generiert. Die Summe der beiden erzeugten Signale wird gebildet, wobei der Betriebsstrom der Kompensationslichtquelle derart eingeregelt wird, dass sich die Summe der Signale für den Fall, das kein Reflexionsobjekt auf oder über der Funktionsfläche angeordnet ist, zu Null ergibt. Dieses Nullsummensignal ist dabei völlig unabhängig von Fremdlichteinfall, Verkratzung oder Verschmutzung der Oberfläche etc. Ausschließlich ein durch ein Objekt oberhalb der Funktionsfläche auftretender reflektierter Anteil des modulierten Sendelichts führt zu einem Signal und lässt sich hinsichtlich des Objektabstands zur Funktionsfläche und/oder dessen Annäherungsgeschwindigkeit analysieren. Es ist selbstverständlich, dass dabei je nach Ausbildung der Lichtquelle der Sensoreinrichtung unterschiedliche Reichweiten hinsichtlich der Abstandsmessung und/oder Geschwindigkeitsmessung realisierbar sind.

Eine solche Sensoreinrichtung arbeitet ohne mechanisch bewegliche Teile und ist während der Lebensdauer des Lenkrades, wie vorangehend beschrieben, unabhängig von einer allmählichen Verkratzung und Verschmutzung der Funktionsflächen. Daher stellt es eine Betätigungsvorrichtung dar, die eine dauerhafte und gleichbleibend zuverlässige Funktion gewährleistet. Außerdem ermöglicht die Funktionalität der Abstands- und/oder Geschwindigkeitsmessung der sich oberhalb der Funktionsflächen der Sensoreinrichtung befindlichen Objekte die Integration weiterer Funktionen ohne dafür weitere separate Vorrichtungen zu benötigen.

Die reflexionsoptischen Funktionsflächen lassen sich aufgrund ihres geringen Bauraumbedarfs auf sämtlichen Bauelementen des Lenkrades, nämlich dem Lenkradkranz und/oder den Lenkradspeichen und/oder dem Nabenkörper anordnen.

Die mindestens eine reflexionsoptische Sensoreinrichtung eignet sich, wie vorangehend dargestellt, neben ihrer Funktion als eine durch den Willen des Fahrzeugführers beeinflusste Betätigungsvorrichtung zusätzlich für eine vom Willen des Fahrzeugführers unabhängige Messung der Parameter bezüglich des Abstands und/oder der Annäherungsgeschwindigkeit zwischen Fahrzeugführer und Lenkrad. Auf diese Weise lässt sich die Sensoreinrichtung neben der Funktion des willentlich durch den Fahrzeugführer verursachten Steuerns und Regelns zur Ermittlung der vorangehend genannten Parameter für das elektronische Sicherheitssystem des Kraftfahrzeugs nutzen. Auch für diesen Fall ist das Merkmal des Steuerns und/oder Regelns einer Kfz-Baugruppe, nämlich des elektronischen Kfz-Sicherheitssystems, durch die Betätigungsvorrichtung gegeben. Im Unterschied zu der vorangehend beschriebenen Funktionalität erfolgt dieses Steuern und/oder Regeln jedoch unabhängig vom Willen des Fahrzeugführers.

Es ist selbstverständlich, dass sich am Lenkrad mehrere reflexionsoptische Sensorsysteme vorsehen lassen, wobei diese jeweils die vorangehend genannte "willensgesteuerte" Funktionalität oder die vom Willen des Fahrzeugführer unabhängige Funktionalität oder eine Kombination beider Funktionalitäten aufweisen

Es ist von Vorteil, die Funktionsfläche der Sensoreinrichtung im Lenkradkranz oder derart an einer Lenkradspeiche anzuordnen, dass der Fahrzeugführer die Funktionsfläche mit einem seiner Fingerspitzen erreicht, ohne dafür die Hand vom Lenkradkranz nehmen zu müssen. Auf diese Weise kann der Fahrzeugführer das Fahrzeug lenken und gleichzeitig Parameter einer Kfz-Baugruppe über die Sensoreinrichtung steuern und/oder regeln. Als Finger im Sinne der vorliegenden Erfindung zählt selbstverständlich auch der Daumen. Das im Rahmen der vorliegenden Erfindung benutzte Merkmal der Fingerspitze umfasst im wesentlichen den Bereich des ersten Fingergliedes.

Bevorzugt ist die Sensoreinrichtung derart ausgebildet, dass ein Antippen der Funktionsfläche mit einer Fingerspitze des Fahrzeugführers ein Aus- oder Einschaltsignal für eine Funktion einer Baugruppe des Kraftfahrzeuges generiert. Dadurch, dass die Auswerteelektronik der Sensoreinrichtung zwischen einem Annähern eines Objekts ohne Berührung der Funktionsfläche - hier durch eine Fingerspitze - dem Tippen der Fingerspitze auf die Oberfläche oder dem Wischen über die Funktionsfläche differenzieren kann, lassen sich unerwünschte Fehlfunktionen der Betätigungseinrichtung durch eine entsprechende Messsignalauswertung wirksam vermeiden.

In einer bevorzugten Ausführungsform des Lenkrads mit einer in einer Vertiefung vorgesehenen Funktionsfläche ist vorgesehen, dass die Funktionsfläche einen im untersten Bereich der Vertiefung angeordneten Scheitelbereich und einen daran auf der einen Seite anschließenden ersten Schenkel und einen auf der anderen Seite anschließenden zweiten Schenkel aufweist. Dabei ist die Sensorvorrichtung bevorzugt derart ausgebildet, dass ein Fahrzeugführer durch das Antippen der Funktionsfläche im Scheitelbereich mit einer Fingerspitze eine Steuer- und/oder Regelfunktion einer Kraftfahrzeug-Baugruppe aktiviert.

Weiterhin ist mit Vorteil vorgesehen, die Sensoreinrichtung derart auszubilden, dass der Fahrzeugführer durch das Verschieben der Fingerspitze ausgehend vom Scheitelbereich auf dem ersten Schenkel ein erstes Steuer- und/oder Regelsignal einer Baugruppe des Kraftfahrzeuges und durch das Verschieben der Fingerspitze ausgehend vom Scheitelbereich auf dem zweiten Schenkel ein zweites Steuer- und/oder Regelsignal einer Baugruppe des Kraftfahrzeuges erzeugt. Auf diese Weise wird ein rein haptisches Auffinden und Bedienen der Sensoreinrichtung des Lenkrads ermöglicht, wobei unerwünschte Fehlbedienungen durch das Versenken der Funktionsfläche in einer Vertiefung erschwert werden. Dabei sind der erste und der zweite Schenkel der Funktionsfläche bevorzugt symmetrisch zueinander ausgebildet.

In einer weiteren Ausführungsform ist die Funktionsfläche der Sensoreinrichtung in einer Richtung quer zu einer vom Lenkradkranz aufgespannten Ebene, bevorzugt senkrecht zu dieser Ebene, vertieft.

Eine bevorzugte Variante der Erfindung sieht vor, dass die Funktionsfläche der Sensoreinrichtung an einer zum Nabenkörper hin hervortretenden Ausbuchtung des Lenkradkranzes angeordnet ist. Derartige Ausbuchtungen, die ausgehend von der Kontur des Innendurchmessers des Lenkradkranzes organisch in Richtung der Lenkraddrehachse ausgeformt sind, sind aus dem Stand der Technik für Kfz-Lenkräder bekannt und dienen dazu, dem Fahrzeugführer die Möglichkeit einer alternativen Handhalteposition des Lenkradkranzes zu bieten. Dadurch wird einer Ermüdung der Handmuskulatur des Fahrzeugführers vorgebeugt.

Das Lenkrad eines Kraftfahrzeuges wird durch den Fahrzeugführer meist in der in Bezug auf die Geradeaus-Position des Lenkrades oberen Hälfte gehalten. Daher ist es von Vorteil, die Funktionsfläche der Sensoreinrichtung in diesem Bereich oberhalb einer durch den Lenkradkranz definierten Lenkraddrehachse am Lenkrad anzuordnen.

Eine besonders bevorzugte Ausführungsform des Lenkrads sieht vor, dass in Bezug auf die Geradeaus-Position des Lenkrades symmetrisch zur Sensoreinrichtung eine zweite Sensoreinrichtung im Bereich oberhalb der Lenkraddrehachse angeordnet ist. Dadurch ergibt sich eine der linken und eine der rechten Hand des Fahrzeugführers zugeordnete Sensoreinrichtung.

Eine weitere Ausführungsform des erfindungsgemäßen Lenkrades weist mindestens eine entlang einer Erstreckungsachse gestreckte Funktionsfläche einer Sensoreinrichtung auf, wobei diese gestreckte Funktionsfläche auf den Lenkradspeichen und/oder auf der Lenkradnabe angeordnet ist und die Ausdehnung der gestreckten Funktionsfläche quer zur Erstreckungsachse derart ausgebildet ist, dass keine wesentliche Bewegung einer Fingerspitze eines Fahrzeugführers quer zur Erstreckungsrichtung möglich ist. Auf diese Weise wird eine Funktionsfläche bereitgestellt, deren Bedienungsrichtung, die der Erstreckungsachse entspricht, für einen Fahrzeugführer wiederum rein haptisch auffindbar ist, ohne dass er dafür die Augen von der Verkehrssituation des Kraftfahrzeuges abwenden müsste.

Die Sensoreinrichtung ist dabei bevorzugt derart ausgebildet, dass eine Regelfunktion für einen zugeordneten Parameter einer Kfz-Baugruppe durch das Annähern an und/oder das Berühren der gestreckte Funktionsfläche durch eine Fingerspitze des Fahrzeugführers aktivierbar ist. Die Regelung des Parameters erfolgt dann mittels einer Bewegung der Fingerspitze in die eine oder andere Richtung entlang der Erstreckungsrichtung. Ist die gestreckte Funktionsfläche dabei auf einer in der Geradeaus-Position des Lenkrades vom unteren Rand des Lenkradkranzes verlaufenden Lenkradspeiche angeordnet, so ergibt sich die Richtung des Herauf- und Herunterregelns intuitiv durch die entsprechende Herauf- und Herunterbewegung der Fingerspitze auf der gestreckten Funktionsfläche.

In einer bevorzugten Ausführungsform lässt sich der zugeordnete zu regelnde Parameter der Kfz-Baugruppe mittels Sprachsteuerung des Fahrzeugführers über ein Kfz-Spracherkennungssystem auswählen. Zusätzlich oder alternativ lässt sich der zugeordnete Parameter auf einem am Lenkrad oder im Armaturenbereich angeordneten Display optisch und/oder durch eine entsprechende Sprachausgabe eines Kfz-Bordcomputersystems akustisch anzeigen.

Eine weitere bevorzugte Variante sieht vor, dass der zugeordnete Parameter durch die Bewegung der Fingerspitze auf einer entlang mehrerer Erstreckungsachsen ausgedehnten Funktionsfläche einer weiteren Sensoreinrichtung auswählbar ist. Dabei ist der zugeordnete Parameter durch eine Bewegung der Fingerspitze entlang einer ersten Erstreckungsachse der ausgedehnten Funktionsfläche auswählbar und das Regeln und/oder Steuern des ausgewählten, zugeordneten Parameters erfolgt durch eine Bewegung der Fingerspitze entlang einer zweiten Erstreckungsachse. Hier lässt sich somit durch die Bewegung der Fingerspitze des Fahrzeugführers auf einem zweidimensionalen Feld zum einen der gewünschte zugeordnete Parameter auswählen und zum anderen steuern und/oder regeln.

Zusätzlich ist mit Vorteil vorgesehen, dass auswählbare zugeordnete Parameter auf einer am Lenkrad oder im Armaturenbereich angeordneten Auswahlanzeige für den Fahrzeugführer optisch erkennbar sind, wobei die Bewegung der Fingerspitze auf der ausgedehnten Funktionsfläche einen Zeiger auf der Auswahlanzeige steuert und die Auswahl eines gewünschten, zugeordneten Parameters durch die Bewegung des Zeigers auf den in der Auswahlanzeige dargestellten, gewünschten zugeordneten Parameter und ein anschließendes Antippen der ausgedehnten Funktionsfläche mittels der Fingerspitze möglich ist.

In einer weiteren, bevorzugten Ausführungsform sind eine Vielzahl von Sensoreinrichtungen mit Funktionsflächen derart am Lenkradkranz und/oder an den Lenkradspeichen angeordnet, dass Bereiche, an denen ein Fahrzeugführer das Lenkrad mit seinen Händen berührt oder umfasst, detektierbar sind. Dadurch lassen sich die für das elektronische Sicherheitssystem des Fahrzeug wichtigen Informationen über die Griffpositionen der Hände des Fahrzeugführers am Lenkrad gewinnen. Wie vorstehend beschrieben, handelt es sich auch hier um ein Steuern und/oder Regeln unabhängig vom Willen des Fahrzeugführers.

Wie bereits eingangs erläutert, eignet sich die reflexionsoptische Sensoreinrichtung auch zur Ermittlung der Parameter bezüglich der Position und/oder der Annäherungsgeschwindigkeit des Fahrzeugführer-Oberkörpers im Verhältnis zum Lenkrad. Aus diesem Grund ermöglicht die Verwendung eines erfindungsgemäßen Lenkrades ein Verfahren, bei dem die genannten Parameter ermittelt und an das elektronische Sicherheitssystem des Fahrzeuges weitergegeben werden, wobei die Parameter insbesondere im Crashfall des Kraftfahrzeuges die Entscheidung des elektronischen Sicherheitssystems beeinflussen, ob und auf welche Weise ein Lenkrad-Airbag und/oder dem Fahrzeugführer zugeordnete Seitenairbags ausgelöst werden.

Der Begriff des Fahrzeugführer-Oberkörpers umfasst immer auch den Kopf des Fahrzeugführers.

Weitere Eigenschaften und Vorteile der Erfindung werden im Zusammenhang mit der Beschreibung der folgenden bevorzugten Ausführungsbeispiele erläutert.

Es zeigen:
- Figur 1a: eine Aufsicht einer ersten Ausführungsform des Lenkrads;
- Figur 1b: einen Detailausschnitt des Lenkrads aus Figur 1a;
- Figur 1c: einen Querschnitt entlang der Linie Ic-Ic aus Figur 1b;
- Figur 2: eine Aufsicht einer zweiten Abwandlung des Lenkrads;
- Figur 3: eine Aufsicht einer dritten Abwandlung des Lenkrads;
- Figur 4: eine Aufsicht einer vierten Abwandlung des Lenkrads und
- Figur 5: die schematische Darstellung eines Verfahrens unter Verwendung eines erfindungsgemäßen Lenkrades.

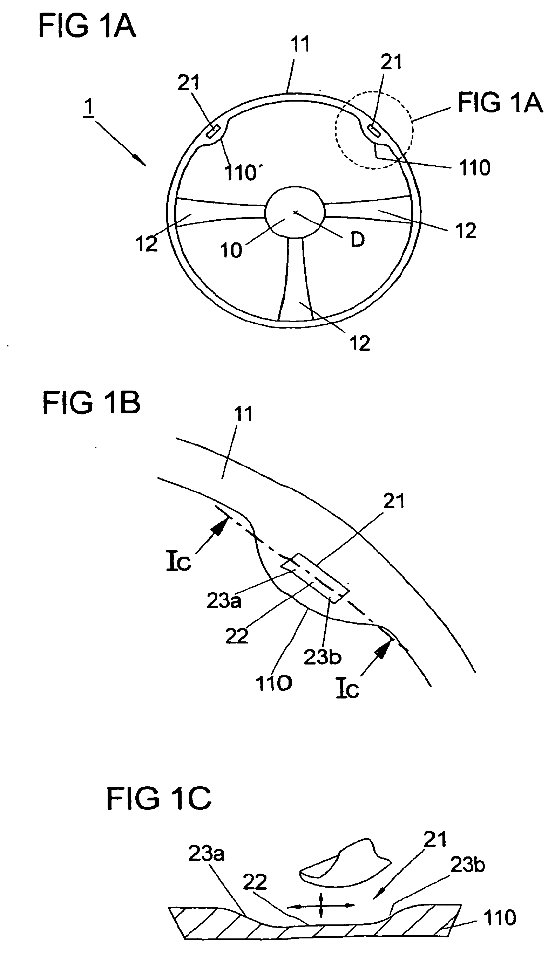

Die in Figur 1a dargestellte erste Ausführungsform des Lenkrads 1 umfasst einen ringförmigen Lenkradkranz 11 mit einer im wesentlichen kreisförmig ausgebildeten Außenkontur. Dieser Lenkradkranz 11 ist mittels dreier vom Lenkradkranz 11 ausgehend nach innen gerichteter Lenkradspeichen 12 drehfest am mittig zur kreisförmigen Außenkontur des Lenkradkranzes 11 angeordneten Nabenkörper 10 befestigt.

In Figur 1a ist der Nabenkörper 10 in der Aufsicht kreisförmig dargestellt. Die äußere Form des Nabenkörpers 10 ist einerseits davon beeinflusst, dass dieser üblicherweise ein Airbagmodul aufnimmt. Außerdem spielt die insbesondere in seiner geometrischen Form Ausdruck findende optische Anmutung hinsichtlich des Designs im Fahrzeuginnenraum eine wichtige Rolle. Abweichend von der hier in Figur 1a gewählten Darstellung ist jede andere geometrische Ausbildung des Nabenkörpers 10 ebenfalls von der Erfindung umfasst.

Gleiches gilt für die geometrische Ausbildung und für die Anzahl der Lenkradspeichen 12. Bei der ersten Ausführungsform des erfindungsgemäßen Lenkrads 1 sind lediglich beispielhaft drei Lenkradspeichen 12 vorgesehen.

Der Lenkradkranz 11 weist eine zum Nabenkörper 10 hin ausgerichtete als Ausbuchtung 110 ausgebildete erste abschnittsweise Verbreiterung des Lenkradkranzes 11 auf. In Figur 1b ist im Detail dargestellt, wie die Kontur der ersten Ausbuchtung 110 aus der kreisförmigen Innenkontur des Lenkradkranzes 11 stetig organisch in Form einer gestreckten Blase hervortritt und wiederum stetig organisch in die kreisförmige Innenkontur des Lenkradkranzes 11 übergeht. Die erste Ausbuchtung 110 ist derart dimensioniert, dass beim Umfassen der ersten Ausbuchtung 110 durch die Hand eines Fahrzeugführers der Daumenballen zumindest abschnittsweise auf der Oberseite der Ausbuchtung 110 zu liegen kommt, wobei sich die Unterseite des Daumens auf der zum oberen Abschnitt des Lenkrads 1 hin abfallenden Flanke der Ausbuchtung 110 abstützt. Dies gewährleistet eine angenehme Haptik für den Fahrzeugführer, wenn dieser den Lenkradkranz 11 im Bereich der ersten Ausbuchtung 110 umfasst. Die dargestellt achsensymmetrische Ausbildung der ersten Ausbuchtung 110 ist dazu nicht zwingend, vielmehr kann auch eine asymmetrisch geformte Ausbuchtung 110 eine gute Anpassung an die Hand eines Fahrzeugführers gewährleisten.

Die erste Ausbuchtung 110 ist, wie in Figur 1a dargestellt, bevorzugt in der vom Nabenkörper 10 aus gesehen, oberen Hälfte des Lenkradkranzes 11 angeordnet. In dieser oberen Hälfte des Lenkradkranzes 11 ist weiterhin eine zweite Ausbuchtung 110' vorgesehen. Die zweite Ausbuchtung 110' ist dabei spiegelbildlich zur ersten Ausbuchtung 110 in der oberen Hälfte des Lenkradkranzes 11 angeordnet und entspricht auch hinsichtlich ihrer Ausmaße der ersten Ausbuchtung 110. Die vorangehend gemachten Ausführungen gelten somit gleichermaßen für die erste Ausbuchtung 110 und die zweite Ausbuchtung 110'.

In der Detailansicht der Figur 1b ist erkennbar, dass im Bereich der ersten Ausbuchtung 110 eine in der Aufsicht rechteckig ausgebildete reflexionsoptische Funktionsfläche 21 einer Sensoreinrichtung vorgesehen ist. Die zum Betrieb der Funktionsfläche 21 notwendigen Infrarotlichtquellen und -detektoren lassen sich zum einen unterhalb der Funktionsfläche 21 in der ersten Ausbuchtung 110 der Lenkradkranzes 11 anordnen. Zum anderen ist es möglich, die Infrarotlichtquellen an einer anderen Stelle im Lenkradkranz 11, den Lenkradspeichen 12 oder dem Nabenkörper 10 anzuordnen, wobei das emittierte Infrarotlicht und das oberhalb der Funktionsfläche 21 reflektierte Infrarotlicht mittels dazu geeigneter integriert optischer oder Faser-Lichtwellenleiter, bevorzugt POF (plastic optical fiber), zur Funktionsfläche 21 hingeführt und von der Funktionsfläche 21 zurückgeleitet werden.

Damit es beim Lenkvorgang des Lenkrades 1 nicht durch die ungewollte Berührung der Funktionsfläche 21 zu einer unbeabsichtigten Aktivierung der Sensoreinrichtung kommt, ist die Funktionsfläche 21 in einer Vertiefung angeordnet. Die Vertiefungsrichtung liegt im wesentlichen quer zu der durch den Lenkradkranz 11 aufgespannten Ebene. Dies wird in der in Figur 1c gezeigten Schnittdarstellung entlang der Linie Ic-Ic aus Figur 1b deutlich.

Die in der Vertiefung angeordnete Funktionsfläche 21 weist dabei einen in der Vertiefung mittig angeordneten Scheitelbereich 22 auf, durch dessen Berührung sich die Sensoreinrichtung aktivieren lässt. An den Scheitelbereich 22 schließen sich beidseitig und symmetrisch zueinander ausgebildet ein erster Schenkel 23a und ein zweiter Schenkel 23b an. Diese Schenkel sind jeweils entlang der als Linie Ic-Ic in Figur 1b dargestellten Erstreckungsachse der rechteckig ausgebildeten Funktionsfläche 21 an den aufsteigenden Flanken der Vertiefung angeordnet.

Die Vertiefung ist derart ausgebildet, dass es beim vorangehend beschriebenen Umfassen der ersten Ausbuchtung 110 durch die Hand eines Fahrzeugführers zu keiner Berührung der Hand mit dem Scheitelbereich 22 der Funktionsfläche 21 kommt. Quer zur Erstreckungsachse Ic-Ic ist die Vertiefung hinreichend breit ausgebildet, damit eine Fingerspitze 30, insbesondere die Daumenspitze, des Fahrzeugführers in die Vertiefung hineinpasst. Mit der Fingerspitze 30 kann der Fahrzeugführer somit den Scheitelbereich 22 der Funktionsfläche 21 berühren, um die Sensoreinrichtung zu aktivieren. Nach der Berührung des Scheitelbereichs 22 kann der Fahrzeugführer durch die Bewegung der Fingerspitze 30 in Richtung des ersten Schenkels 23a oder des zweiten Schenkels 23b ein erstes oder zweites Steuer- und/oder Regelsignal generieren. Das Steuersignal kann beispielsweise eine Veränderung des Funktionszustands einer Kfz-Baugruppe durch Ein- oder Ausschalten der Kfz-Baugruppe führen.

Der Steuer- bzw. Regelvorgang ist dabei durch den jeweils an einer ansteigenden Flanke der Vertiefung angeordneten ersten Schenkel 23a bzw. zweiten Schenkel 23b für den Fahrzeugführer haptisch wahrnehmbar. Daher ermöglicht diese Ausführungsform des erfindungsgemäßen Lenkrads, dass der durch den Fahrzeugführer vorgenommene Steuer- und/oder Regelvorgang ausschließlich durch haptische Wahrnehmung erfolgt. Zunächst lässt sich eine der beiden Ausbuchtungen 110, 110' durch Entlanggleiten der Hand am Lenkradkranz ertasten. Dann gleitet ein Finger über die Oberfläche der Ausbuchtung bis zur Vertiefung, berührt den Scheitelbereich 22 der in der Vertiefung angeordneten Funktionsfläche 21, aktiviert dadurch die Sensoreinrichtung und führt den gewünschten Steuer- und/oder Regelvorgang, wie vorangehend dargestellt, ebenfalls mittels haptischer Wahrnehmung über die Fingerspitzen 30 des Fahrzeugführers aus. Bei all diesen Aktionen ist ein Fahrzeugführer daher zu keinem Zeitpunkt auf die optische Wahrnehmung des Lenkrades 1 angewiesen und muss folglich die Augen zu keinem Zeitpunkt von der Verkehrssituation abwenden.

Den beiden an den Ausbuchtungen 110, 110' vorgesehenen Funktionsflächen 21 lassen sich zum einen feste Steuer- und/oder Regelfunktionen zuordnen. Beispielsweise der einen Funktionsfläche die Lautstärkeregelung der Kfz-HiFi-Anlage und der anderen Funktionsfläche das Umschalten zwischen Radiosendern oder Titeln eines abgespielten Musikmediums. Zum anderen ist es aber auch denkbar, einer oder beiden Funktionsflächen 21 seitens des Fahrzeugführers auswählbare Funktionen zuzuordnen. Dies lässt sich beispielsweise über eine Sprachsteuerung realisieren.

Es ist selbstverständlich, dass auch andere geometrische Ausformungen der Vertiefung und der darin befindlichen Funktionsfläche 21 von der Erfindung umfasst werden. Ein einfacher Schalter ohne Regelfunktion lässt sich beispielsweise als eine in einer Vertiefung angeordnete kreisförmige Funktionsfläche auf der Vorder- oder Rückseite einer Lenkradspeiche 12 realisieren. Durch die Vertiefungen ist die räumlich Lage der Funktionsflächen 21 jeweils für den Fahrzeugführer blind ertastbar. Wesentlich für die Anordnung einer Funktionsfläche 21 in einer Vertiefung ist jeweils nur, dass die Vertiefung eine derartige Struktur aufweist, dass ein ungewolltes Aktivieren der Sensoreinrichtung durch die Lenkbewegungen des Fahrzeugführers ausgeschlossen ist.

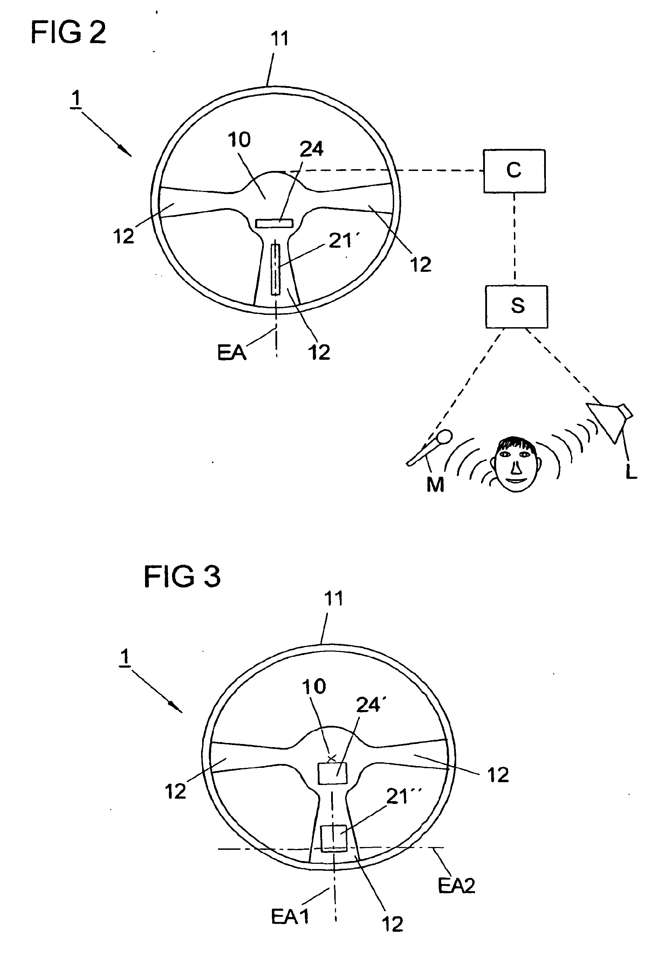

Figur 2 zeigt eine zweite Abwandlung des Lenkrads 1. Der grundsätzliche Aufbau des Lenkrads 1 entspricht dem in Figur 1a gezeigten. Die zur Figur 1a gemachten Ausführungen gelten daher für die übereinstimmenden Merkmale entsprechend. Gleiche Bauelemente sind mit gleichen Bezugsziffern versehen.

Im Unterschied zu der ersten Ausführungsform des Lenkrades 1 ist eine Sensoreinrichtung mit einer gestreckten Funktionsfläche 21' nicht auf dem Lenkradkranz 11 im Bereich einer Ausbuchtung, sondern auf einer Lenkradspeiche 12 angeordnet. Wenn es sich um eine Lenkradspeiche 12 handelt, die aufgrund ihrer Anordnung bei üblichen Lenkbewegungen eines Fahrzeugführers von dessen Händen nicht umfasst wird, ist die Anordnung der gestreckten Funktionsfläche 21' in einer Vertiefung nicht erforderlich.

Bei dem in Figur 2 gezeigten Lenkrad ist es lediglich wahrscheinlich, dass ein Fahrzeugführer die beiden horizontal angeordneten Lenkradspeichen 12 umfasst. Daher ist für die auf der unteren, vertikalen Lenkradspeiche 12 angeordneten gestreckten Funktionsfläche 21' keine Vertiefung zum Verhindern ungewollter Steuer- und Regelvorgänge notwendig.

Außerdem ist es durch eine entsprechende Anpassung der Auswertesoftware der Sensoreinrichtung möglich, dass eine Aktivierung der Funktionsfläche 21' erst nach einer definierten Verweilzeit einer Fingerspitze 30 des Fahrzeugführers auf einem definierten Aktivierungsbereich der gestreckten Funktionsfläche 21' erfolgt. Auch auf diese Weise ist es möglich, zu vermeiden, dass versehentliche Berührungen der gestreckten Funktionsfläche 21' zu einem ungewollten Steuer- oder Regelvorgang führen.

Die gestreckte Funktionsfläche 21 erstreckt sich rechteckförmig entlang einer radial von der Drehachse D des Lenkrades 1 nach außen über die untere Lenkradspeiche 12 verlaufenden Erstreckungsachse EA. Ausgehend von einem mittig angeordneten Aktivierungsbereich kann der Fahrzeugführer durch die Bewegung einer Fingerspitze 30 nach oben oder unten (in Bezug auf die Geradeaus-Position des Lenkrades) ein Steuer- und/oder Regelsignal für eine zugeordneten Parameter einer Kfz-Baugruppe generieren.

Zur Anzeige des der gestreckten Funktionsfläche 21 gerade zugeordneten Parameters einer Kfz-Baugruppe, lässt sich ein auf dem Nabenkörper 10 angeordnetes Display 24 vorsehen. Auf diesem Display 24 ist der zugeordnete Parameter für den Fahrzeugführer deutlich erkennbar dargestellt. Dafür eignen sich bevorzugt solche Displays, die wenig Bauraum benötigen, insbesondere Folien-Displays hergestellt aus OLED-Systemen (Organische-Licht-Emittierende-Dioden).

Zur Auswahl des zugeordneten Parameters durch den Fahrzeugführer kann beispielsweise eine mit einem Mikrofon M ausgestattete Sprachsteuerungseinrichtung S vorgesehen sein, die mit dem Kfz-Bordcomputer C zusammenwirkt. Auf diese Weise lassen sich insbesondere die Funktionen der HiFi-Anlage, des Navigationssystems, der Telefonanlage und/oder der Klimaanlage in Kombination der Sprachsteuerung mit einem als gestreckte Funktionsfläche 21' ausgebildeten Schieberegler umfassend steuern und regeln.

Ebenso wäre es möglich, eine weitere reflexionsoptische Sensoreinrichtung mit einer Funktionsfläche 21 am Lenkrad 1 anzuordnen, mittels der sich zwischen den verschiedenen zugeordneten Parametern der gestreckten Funktionsfläche 21' umschalten lässt. Der jeweils zugeordnete Parameter ist für den Fahrzeugführer wiederum über ein Display 24 und/oder eine mit einem Lautsprecher L ausgestattete Sprachsteuerungseinrichtung S des Kfz-Bordcomputers C erkennbar.

In Figur 3 ist eine dritte Abwandlung des Lenkrades 1 dargestellt. Der grundsätzliche Aufbau des Lenkrads 1 entspricht dem in den Figuren 1a und 2 gezeigten. Die vorangehenden Ausführungen gelten daher für die übereinstimmenden Merkmale entsprechend. Gleiche Bauelemente sind mit gleichen Bezugsziffern versehen.

Im Unterschied zu den ersten beiden Abwandlungen des Lenkrades 1 ist bei der dritten Abwandlung des Lenkrades 1 eine Sensoreinrichtung mit einer Funktionsfläche 21" vorgesehen, die sich auf der unteren Lenkradspeiche 12 als ausgedehnte Funktionsfläche 21" entlang einer ersten Erstreckungsachse EA1 und einer senkrecht dazu angeordneten zweiten Erstreckungsachse EA2 erstreckt. Die erste Erstreckungsachse EA1 verläuft dabei ausgehend von der Drehachse D des Lenkrades 1 in radialer Richtung über die untere Lenkradspeiche 12 zum Lenkradkranz 11. Die zweite Erstreckungsachse EA2 verläuft senkrecht zur ersten Erstreckungsachse EA1 im wesentlichen parallel zu einer durch den Lenkradkranz 11 aufgespannten Ebene.

Die tableauförmig ausgedehnte Funktionsfläche 21" ermöglicht z.B. durch die Bewegung der Fingerspitze 30 entlang der unteren oder oberen Tableaukante parallel zur zweiten Erstreckungsrichtung die Auswahl des der ausgedehnten Funktionsfläche 21" zugeordneten zu steuernden und/oder zu regelnden Parameters einer Kfz-Baugruppe. Die sich während des Bewegens entlang der Tableaukante verändernde zugeordneten Parameter sind auf einer am Nabenkörper angeordneten Anzeigevorrichtung 24' für den Fahrzeugführer sichtbar. Hat er den gewünschten Parameter erreicht, so erfolgt dessen Steuerung und/oder Regelung durch die Bewegung seines Fingers entlang der ersten Erstreckungsachse EA1.

Ebenso ist es denkbar, die ausgedehnte Funktionsfläche 21" mit einer Funktionalität ähnlich einem Trackpad eines tragbaren Computers auszubilden. D.h. die Fingerbewegung auf der ausgedehnten Funktionsfläche 21" bewegt einen auf der Anzeigevorrichtung 24' dargestellten Zeiger. Auf der Anzeigevorrichtung 24' sind außerdem die zugeordneten Parameter dargestellt, die durch eine Bewegung des Zeigers auf den gewünschten Parameter und ein "Anklicken" dieses Parameters durch eine Tastbewegung des Fingers auswählbar sind.

Die Anzeigevorrichtung 24' könnte selbstverständlich auch im Armaturenbereich des Kraftfahrzeuges angeordnet sein. Eine Kombination der ausgedehnten Funktionsfläche 21" mit einer Sprachsteuerung S eines Bordcomputers C des Kraftfahrzeuges ist entsprechend den zu der in Figur 2 gezeigten zweiten Ausführungsform des Lenkrades ebenso möglich.

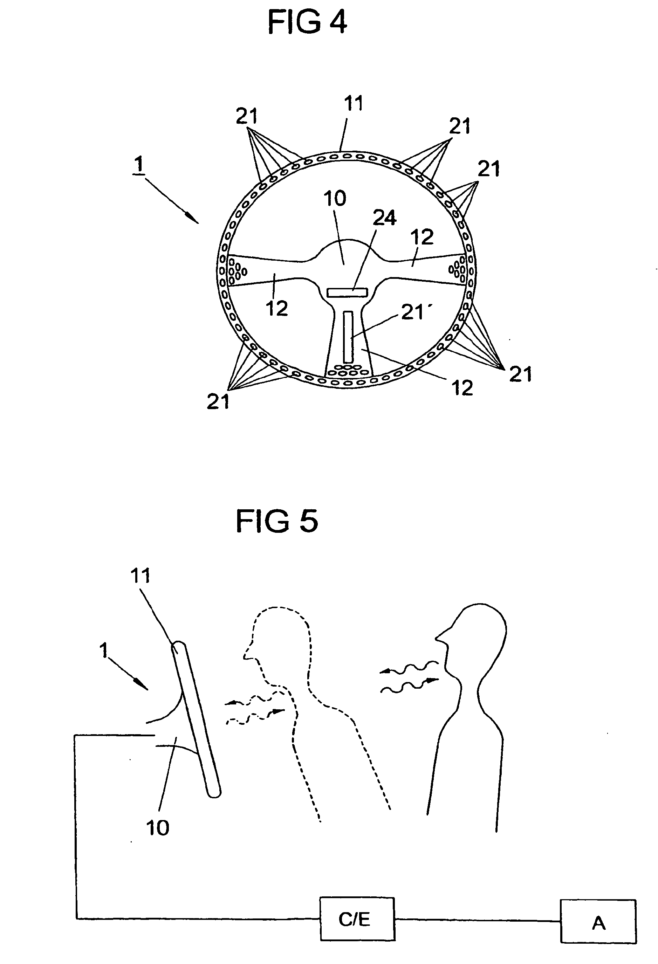

In Figur 4 ist eine vierte Abwandlung des Lenkrades dargestellt. Es entspricht weitgehend der in Figur 2 gezeigten zweiten Abwandlung, so dass auf die dortigen Ausführungen verwiesen wird.

Im Unterschied zu der in Figur 2 gezeigten zweiten Abwandlung des Lenkrades sind bei der vierten Abwandlung zusätzlich eine Vielzahl von Sensoreinrichtungen mit Funktionsflächen 21 entlang des Umfangs des gesamten Lenkradkranzes und in dazu benachbarten Bereichen auf den Lenkradspeichen 12 angeordnet. Im Gegensatz zu den vorangehend beschriebenen, auf dem Lenkradkranz angeordneten Funktionsflächen 21 sind diese Funktionsflächen 21 nicht in Vertiefungen vorgesehen, weil ein Kontakt zwischen den Händen des Fahrzeugführers und den Funktionsflächen erwünscht ist. Auf diese Weise lassen sich Signale erzeugen, die die Position der Hände des Fahrzeugführers am Lenkrad 1 widerspiegeln. Diese Signale dienen als Information für das elektronische Sicherheitssystem des Kraftfahrzeuges. Beispielsweise kann ein optisches und/oder akustisches Warnsignal generiert werden, wenn bei fahrendem Fahrzeug kein oder ein zu geringer Kontakt mit dem Lenkrad vorhanden ist.

Wie bereits erläutert, eigenen sich die auf dem Lenkrad angeordneten reflexionsoptischen Sensoreinrichtungen mit ihren Funktionsflächen 21 dazu, neben ihrer durch den Willen des Fahrzeugführers beeinflussten Funktion auch unabhängig vom Willen des Fahrzeugführers zur Abstandsmessung zwischen dem Lenkrad und dem Oberkörper des Fahrzeugführers zu dienen.

Ein derartiges Verfahren unter Verwendung eines erfindungsgemäßen Lenkrades ist in Figur 5 schematisch dargestellt. Der Oberkörper des Fahrzeugführers ist in einer bezüglich des Lenkrades 1 weiter entfernten, durchgezogen gezeichneten ersten Position und einer zum Lenkrad näheren, gestrichelt gezeichneten zweiten Position dargestellt. Beide Positionen sind mittels der am Lenkrad angeordneten, jedoch in der Seitenansicht verdeckten Sensoreinrichtung detektierbar, indem die jeweils durch den Oberkörper des Fahrzeugführers reflektierte Infrarotstrahlung detektiert wird.

Damit die Hände und Arme die Ermittlung der Position des Fahrzeugführer-Oberkörpers nicht stören ist es vorteilhaft, dass im Bereich des Nabenkörpers 10 oder in den zum Nabenkörper hin angeordneten Bereichen der Lenkradspeichen eine Sensoreinrichtung für die Abstands- und Geschwindigkeitsmessung des Fahrzeugführer-Oberkörpers vorzusehen.

Die ermittelten Parameter werden an das elektronisches Sicherheitssystem E des Kraftfahrzeuges weitergeleitet. Das elektronische Sicherheitssystem E kann als Einheit mit dem Bordcomputersystem oder unabhängig davon ausgebildet sein. Bei der Darstellung in Figur 5 haben die ermittelten Parameter Einfluss auf die Entscheidung, ob und auf welche Weise ein Airbagsystem A aktiviert wird.

Auf diese Weise lassen sich ebenfalls wichtige Informationen für das elektronische Sicherheitssystem E des Kraftfahrzeuges generieren. Diese Informationen können beispielsweise für die Entscheidung des Sicherheitssystems E genutzt werden, ob bei einem langsam fahrenden Fahrzeug im Crashfall die Auslösung des Fahrerairbags durch das elektronische Sicherheitssystem E verhindert wird. Dies ist dann sinnvoll, wenn ein derart geringer Abstand zwischen dem Oberkörper des Fahrzeugführers und dem im Nabenkörper 10 angeordneten Fahrerairbagmodul besteht, dass die Gefahr der Verletzungen durch den sich entfaltenden Fahrerairbag größer sind, als die Verletzungsgefahr ohne Entfaltung des Fahrerairbags. Auch für die Entscheidung über den Zeitpunkt der Auslösung der Seitenairbagsysteme sind die Informationen über den Abstand des Fahrzeugführers zum Lenkrad 1 von Bedeutung.

Weiterhin ist es sinnvoll, wenn die ermittelten Parameter mit weiteren Sensoren zur Bestimmung der Position- und Geschwindigkeit des Fahrzeugführer-Oberkörpers zusammenwirken, um die Gefahr einer fehlerhaften Ermittlung der genannten Parameter zu minimieren.

Weiterhin ist es sowohl zusätzlich als auch in Alleinstellung denkbar, anhand der ermittelten Parameter und elektronisch erfasster Daten bezüglich der Einstellung des Fahrersitzes (Sitzposition in Bezug auf die Fahrtrichtung, Neigung der Rückenlehne, Höheneinstellung des Sitzes etc.) festzustellen, ob sich der Fahrersitz in einer dem Lenkrad zu nahen Position befindet. Bei Bedarf kann das elektronische Sicherheitssystem E dem Fahrer einen entsprechender Hinweis geben.

Darüber hinaus ist es jedoch selbstverständlich, dass das Sicherheitssystem E die ermittelten Parameter neben vielen anderen Eingangsparametern zur Steuerung anderer durch das Sicherheitssystem gesteuerter Vorrichtungen wie beispielsweise ESP, Anti-Schlupf-Regelung, Bremsassistent, Gurtstraffer verwendet werden.

Gemeinsam mit der Abstandsermittlung lässt sich mittels der Sensoreinrichtungen auch die Annäherungsgeschwindigkeit des Fahrzeugführers mit seiner Fingerspitze 30 an die Funktionsflächen 21 ermitteln. Auch dieser Parameter kann für das elektronische Sicherheitssystem E von Bedeutung sein. Beispielsweise können hohe Annäherungsgeschwindigkeiten der Fingerspitze 30 an die Funktionsflächen 21 für ein gefährliche Verkehrssituation sprechen. In einem solchen Fall kann das elektronische Sicherheitssystem des Kraftfahrzeuges beispielsweise durch die Aktivierung eines Bremsassistenzsystems reagieren.

Es ist selbstverständlich, dass sich die vorangehend beschriebenen Abwandlungen des Lenkrades 1 mit den unterschiedlich ausgestalteten Funktionsflächen 21, 21', 21" auch untereinander kombinieren lassen.

### Bezugszeichenliste

- 1: Lenkrad
- 10: Nabenkörper
- 11: Lenkradkranz
- 12: Lenkradspeiche
- 21, 21', 21 ": Funktionsflächen einer Sensoreinrichtung
- 22: Scheitelbereich der Funktionsfläche
- 23a: erster Schenkel der Funktionsfläche
- 23b: zweiter Schenkel der Funktionsfläche
- 24: Display
- 24': Anzeigevorrichtung
- 110, 110': Ausbuchtungen des Lenkradkranzes
- A: Airbagsystem
- C: Bordcomputersystem eines Kfz
- D: Drehachse des Lenkrads
- E: Elektronisches Kfz-Sicherheitssystem
- L: Lautsprecher
- M: Mikrofon
- S: Sprachsteuerungseinrichtung

## Patentansprüche

1. Lenkrad (1) für ein Kraftfahrzeug mit
- einem Nabenkörper (10),
- einem Lenkradkranz (11),
- mindestens einer Lenkradspeiche (12) zur Befestigung des Lenkradkranzes (11) am Nabenkörper (10) und
- mindestens einer an dem Nabenkörper (10), an dem Lenkradkranz (11) oder an der Lenkradspeiche (12) angeordneten Betätigungsvorrichtung zum Steuern und/oder Regeln einer Baugruppe eines Kraftfahrzeuges, wobei die Betätigungsvorrichtung als reflexionsoptische Sensoreinrichtung ausgebildet ist, die eine reflexionsoptische Funktionsfläche (21) zur Aktivierung der Sensoreinrichtung aufweist,
**dadurch gekennzeichnet,**
**dass** die Funktionsfläche (21) in einer Vertiefung im Lenkrad (1) angeordnet ist.

2. Lenkrad gemäß Anspruch 1, **dadurch gekennzeichnet, dass** das Lenkrad (1) eine Mehrzahl Sensoreinrichtungen mit reflexionsoptischen Funktionsflächen (21, 21', 21") aufweist, die auf dem Lenkradkranz (11) und/oder den Lenkradspeichen (12) und/oder dem Nabenkörper (10) angeordnet sind.

3. Lenkrad gemäß Anspruch 1 oder 2, **dadurch gekennzeichnet, dass** die Funktionsfläche (21, 21', 21") der Sensoreinrichtung im Lenkradkranz (11) oder derart an einer Lenkradspeiche (12) angeordnet ist, dass der Fahrzeugführer die Funktionsfläche (21) mit einer seiner Fingerspitzen (30) erreicht, ohne dafür die Hand vom Lenkradkranz (11) nehmen zu müssen.

4. Lenkrad gemäß einem der Ansprüche 1 bis 3, **dadurch gekennzeichnet, dass** ein Antippen der Funktionsfläche (21, 21', 21") mit einer Fingerspitze (30) des Fahrzeugführers ein Aus- oder Einschaltsignal für eine Funktion einer Baugruppe des Kraftfahrzeuges generiert.

5. Lenkrad gemäß einem der Ansprüche 2 bis 4, **dadurch gekennzeichnet, dass** die Funktionsfläche (21) einen im untersten Bereich der Vertiefung angeordneten Scheitelbereich (22) und einen daran auf der einen Seite anschließenden ersten Schenkel (23a) und einen auf der anderen Seite anschließenden zweiten Schenkel (23b) aufweist.

6. Lenkrad gemäß Anspruch 5, **dadurch gekennzeichnet, dass** die Sensorvorrichtung derart ausgebildet ist, dass ein Fahrzeugführer durch das Antippen der Funktionsfläche (21) im Scheitelbereich (22) mit einer Fingerspitze (30) eine Steuer- und/oder Regelfunktion einer Kraftfahrzeug-Baugruppe aktiviert.

7. Lenkrad gemäß Anspruch 6, **dadurch gekennzeichnet, dass** die Sensoreinrichtung derart ausgebildet ist, dass der Fahrzeugführer durch das Verschieben der Fingerspitze (30) ausgehend vom Scheitelbereich (22) auf dem ersten Schenkel (23a) ein erstes Steuer- und/oder Regelsignal einer Baugruppe des Kraftfahrzeuges erzeugt.

8. Lenkrad gemäß Anspruch 7, **dadurch gekennzeichnet, dass** die Sensoreinrichtung derart ausgebildet ist, dass der Fahrzeugführer durch das Verschieben der Fingerspitze (30) ausgehend vom Scheitelbereich (22) auf dem zweiten Schenkel (23b) ein zweites Steuer- und/oder Regelsignal einer Baugruppe des Kraftfahrzeuges erzeugt.

9. Lenkrad gemäß einem der Ansprüche 5 bis 8, **dadurch gekennzeichnet, dass** der erste und der zweite Schenkel (23a, 23b) der Funktionsfläche (21) symmetrisch zueinander ausgebildet sind.

10. Lenkrad gemäß einem der Ansprüche 3 bis 9, **dadurch gekennzeichnet, dass** sich die Funktionsfläche (21) der Sensoreinrichtung in einer Richtung quer zu einer vom Lenkradkranz (11) aufgespannten Ebene vertieft.

11. Lenkrad gemäß Anspruch 10, **dadurch gekennzeichnet, dass** sich die Funktionsfläche (21) der Sensoreinrichtung im wesentlichen senkrecht zu der vom Lenkradkranz (11) aufgespannten Ebene vertieft.

12. Lenkrad gemäß einem der Ansprüche 1 bis 11, **dadurch gekennzeichnet, dass** die Funktionsfläche (21) der Sensoreinrichtung an einer zum Nabenkörper (10) hin hervortretenden Ausbuchtung (110) des Lenkradkranzes (11) angeordnet ist.

13. Lenkrad gemäß einem der Ansprüche 1 bis 12, **dadurch gekennzeichnet, dass** die Funktionsfläche (21) der Sensoreinrichtung in Bezug auf eine Geradeaus-Position des Lenkrades (1) in einem Bereich oberhalb einer durch den Lenkradkranz (11) definierten Lenkraddrehachse (D) am Lenkrad (1) angeordnet ist.

14. Lenkrad gemäß Anspruch 13, **dadurch gekennzeichnet, dass** in Bezug auf die Geradeaus-Position des Lenkrades (1) symmetrisch zur Funktionsfläche (21) der Sensoreinrichtung eine Funktionsfläche (21a) einer zweiten Sensoreinrichtung im Bereich oberhalb der Lenkraddrehachse (D) angeordnet ist.

15. Lenkrad gemäß einem der Ansprüche 2 bis 14, **dadurch gekennzeichnet, dass** mindestens eine Sensoreinrichtung eine entlang einer Erstreckungsachse (EA) gestreckte Funktionsfläche (21') aufweist und auf den Lenkradspeichen (12) und/oder auf der Lenkradnabe (11) angeordnet ist, wobei die Ausdehnung der gestreckten Funktionsfläche (21') quer zur Erstreckungsachse (EA) derart ausgebildet ist, dass keine wesentliche Bewegung einer Fingerspitze (30) eines Fahrzeugführers quer zur Erstreckungsrichtung (EA) möglich ist.

16. Lenkrad gemäß Anspruch 15, **dadurch gekennzeichnet, dass** eine Regelfunktion für einen zugeordneten Parameter einer Kfz-Baugruppe durch das Annähern an und/oder das Berühren der gestreckte Funktionsfläche (21') durch eine Fingerspitze (30) des Fahrzeugführers aktivierbar ist.

17. Lenkrad gemäß Anspruch 16, **dadurch gekennzeichnet, dass** sich der zugeordnete Parameter der Kfz-Baugruppe mittels einer Bewegung der Fingerspitze (30) in die eine oder andere Richtung entlang der Erstreckungsrichtung (EA) herauf- oder herunterregeln lässt.

18. Lenkrad gemäß Anspruch 17, **dadurch gekennzeichnet, dass** der zugeordnete Parameter der Kfz-Baugruppe mittels Sprachsteuerung des Fahrzeugführers über ein Kfz-Spracherkennungssystem auswählbar ist.

19. Lenkrad gemäß Anspruch 17 oder 18, **dadurch gekennzeichnet, dass** der zugeordnete Parameter auf einem am Lenkrad (1) oder im Armaturenbereich angeordneten Display (24) und/oder durch eine entsprechende Sprachausgabe eines Kfz-Bordcomputersystems für den Fahrzeugführer erkennbar ist.

20. Lenkrad gemäß einem der Ansprüche 16 bis 19, **dadurch gekennzeichnet, dass** der zugeordnete Parameter durch die Bewegung der Fingerspitze (30) auf einer entlang mehrerer Erstreckungsachsen (EA1, EA2) ausgedehnten Funktionsfläche (21") einer weiteren Sensoreinrichtung auswählbar ist.

21. Lenkrad gemäß Anspruch 20, **dadurch gekennzeichnet, dass** der zugeordnete Parameter durch eine Bewegung der Fingerspitze (30) entlang einer zweiten Erstreckungsachse (EA2) der ausgedehnten Funktionsfläche (21") auswählbar ist und das Regeln des ausgewählten, zugeordneten Parameters durch eine Bewegung der Fingerspitze (30) entlang einer im wesentlichen senkrecht dazu angeordneten ersten Erstreckungsachse (EA1) erfolgt.

22. Lenkrad gemäß Anspruch 20, **dadurch gekennzeichnet, dass** auswählbare zugeordnete Parameter auf einer am Lenkrad oder im Armaturenbereich angeordneten Auswahlanzeige (24') für den Fahrzeugführer optisch erkennbar sind, wobei die Bewegung der Fingerspitze (30) auf der ausgedehnten Funktionsfläche (21") einen Zeiger auf der Auswahlanzeige (22') steuert und die Auswahl eines gewünschten, zugeordneten Parameters durch die Bewegung des Zeigers auf den in der Auswahlanzeige (24') dargestellten, gewünschten zugeordneten Parameter und ein anschließendes Antippen der ausgedehnten Funktionsfläche (21") möglich ist.

23. Lenkrad gemäß einem der Ansprüche 2 bis 22, **dadurch gekennzeichnet, dass** eine Vielzahl von Sensoreinrichtungen mit Funktionsflächen (21) derart am Lenkradkranz (11) und/oder an den Lenkradspeichen (12) angeordnet sind, dass Bereiche, in denen ein Fahrzeugführer das Lenkrad mit seinen Händen berührt oder umfasst, detektierbar sind.

24. Verfahren unter Verwendung eines Lenkrades gemäß einem der vorangehenden Ansprüche, mit den folgenden Schritten:
- mit mindestens einer als Betätigungsvorrichtung auf dem Lenkrad angeordneten reflexionsoptischen Sensoreinrichtung werden die Parameter Abstand und/oder Annäherungsgeschwindigkeit des Oberkörpers des Fahrzeugführers im Verhältnis zum Lenkrad ermittelt,
- die derart ermittelten Parameter werden an das elektronische Sicherheitssystem des Fahrzeuges weitergegeben und beeinflussen insbesondere im Crashfall die Entscheidung des elektronischen Sicherheitssystems ob und auf welche Weise ein Lenkrad-Airbag und/oder dem Fahrzeugführer zugeordnete Seitenairbags ausgelöst werden.

## Claims

1. Steering wheel (1) for a motor vehicle having
- a hub element (10),
- a steering wheel rim (11),
- at least one steering wheel spoke (12) for attaching the steering wheel rim (11) to the hub element (10) and
- at least one activation device which is arranged on the hub element (10), on the steering wheel rim (11) or on the steering wheel spoke (12) and has the purpose of controlling and/or regulating an assembly of a motor vehicle, wherein the activation device is embodied as an optical reflection sensor device which has an optical reflection functional face (21) for activation of the sensor device, **characterized in that** the functional face is arranged in a depression in the steering wheel (1).

2. Steering wheel according to Claim 1, **characterized in that** the steering wheel (1) has a plurality of sensor devices with optical reflection functional faces (21, 21', 21") which are arranged on the steering wheel rim (11) and/or the steering wheel spokes (12) and/or the hub element (10).

3. Steering wheel according to Claim 1 or 2, **characterized in that** the functional face (21, 21', 21") of the sensor device is arranged in the steering wheel rim (11) or on a steering wheel spoke (12) in such a way that the driver of the vehicle reaches the functional face (21) with one of his fingertips (30) without having to take his hand off the steering wheel rim (11) in order to do so.

4. Steering wheel according to one of Claims 1 to 3, **characterized in that** the driver of the vehicle generates a switch-off or switch-on signal for a function of an assembly of the motor vehicle by tapping the functional face (21, 21', 21") with a fingertip (30).

5. Steering wheel according to one of Claims 2 to 4, **characterized in that** the functional face (21) has an apex region (22) arranged in the lowest region of the depression and a first limb (23a) adjoining it on one side and a second limb (23b) adjoining on the other side.

6. Steering wheel according to Claim 5, **characterized in that** the sensor device is embodied in such a way that a driver of a vehicle actuates a control function and/or regulating function of a motor vehicle assembly by tapping the functional face (21) in the apex region (22) with a fingertip (30).

7. Steering wheel according to Claim 6, **characterized in that** the sensor device is embodied in such a way that the driver of the vehicle generates a first control signal and/or regulating signal of an assembly of the motor vehicle by moving his fingertip (30) onto the first limb (23a) from the apex region (22).

8. Steering wheel according to Claim 7, **characterized in that** the sensor device is embodied in such a way that the driver of the vehicle generates a second control signal and/or regulating signal of an assembly of the motor vehicle by moving his fingertip (30) onto the second limb (23b) from the apex region (22).

9. Steering wheel according to one of Claims 5 to 8, **characterized in that** the first and second limbs (23a, 23b) of the functional face (21) are embodied so as to be symmetrical with respect to one another.

10. Steering wheel according to one of Claims 3 to 9, **characterized in that** the functional face (21) of the sensor device is countersunk in a transverse direction with respect to a plane extending from the steering wheel rim (11).

11. steering wheel according to Claim 10, **characterized in that** the functional face (21) of the sensor device is countersunk essentially perpendicularly with respect to the plane extending from the steering wheel rim (11).

12. steering wheel according to one of Claims 1 to 11, **characterized in that** the functional face (21) of the sensor device is arranged on a bulge (110) of the steering wheel rim (11) projecting in the direction of the hub element (10).

13. Steering wheel according to one of Claims 1 to 12, **characterized in that** the functional face (21) of the sensor device is arranged on the steering wheel (1) in a region above an axis (D) of rotation of the steering wheel defined by the steering wheel rim (11) with respect to a straight-ahead position of the steering wheel (1).

14. Steering wheel according to Claim 13, **characterized in that** a functional face (21a) of a second sensor device is arranged in the region above the axis (D) of rotation of the steering wheel symmetrically to the functional face (21) of the sensor device with respect to the straight-ahead position of the steering wheel (1).

15. Steering wheel according to one of Claims 2 to 14, **characterized in that** at least one sensor device has a functional face (21') which is extended along an axis (EA) of extent and is arranged on the steering wheel spokes (12) and/or on the steering wheel hub (11), with the extent of the extended functional face (21') being formed transversely with respect to the axis (EA) of extent in such a way that no significant movement of a fingertip (30) of a driver of a vehicle transversely with respect to the direction (EA) of extent is possible.

16. Steering wheel according to Claim 15, **characterized in that** a regulating function for an assigned parameter of a motor vehicle assembly can be actuated by the driver of a vehicle causing his fingertip (30) to approach and/or touch the extended functional face (21').

17. Steering wheel according to Claim 16, **characterized in that** the assigned parameter of the motor vehicle assembly can be increased or decreased by moving the fingertip (30) in the one or other direction along the direction (EA) of extent.

18. Steering wheel according to Claim 17, **characterized in that** the assigned parameter of the motor vehicle assembly can be selected by speech-activated control by the driver of the vehicle by means of a motor vehicle speech recognition system.

19. Steering wheel according to Claim 17 or 18, **characterized in that** the driver of the vehicle can recognize the assigned parameter on a display (24) which is arranged on the steering wheel (1) or in the dashboard region and/or by means of a corresponding speech output of a motor vehicle on-board computer system.

20. Steering wheel according to one of Claims 16 to 19, **characterized in that** the assigned parameter can be selected by the movement of the fingertip (30) on a functional face (21"), extended along a plurality of axes (EA1, EA2) of extent, of a further sensor device.

21. Steering wheel according to Claim 20, **characterized in that** the assigned parameter can be selected by moving the fingertip (30) along a second axis (EA2) of extent of the extended functional face (21"), and the selected, assigned parameter is regulated by moving the fingertip (30) along a first axis (EA1) of extent which is arranged essentially perpendicularly thereto.

22. Steering wheel according to Claim 20, **characterized in that** selectable assigned parameters can be visually recognized by the driver of the vehicle on a selector display (24') which is arranged on the steering wheel or in the dashboard region, the movement of the fingertip (30) on the extended functional face (21") controlling a cursor on the selector display (21') and the selection of a desired assigned parameter being possible by moving the cursor onto the desired assigned parameter which is displayed on the selector display (24') and subsequently tapping on the extended functional face (21").

23. Steering wheel according to one of Claims 2 to 22, **characterized in that** a plurality of sensor devices with functional faces (21) are arranged on the steering wheel rim (11) and/or on the steering wheel spokes (12) in such a way that regions in which a driver of a vehicle touches or grasps the steering wheel with his hands can be detected.

24. Method using a steering wheel according to one of the preceding Claims, having the following steps:
- the parameters of the distance and/or approach speed of the upper part of the body of the driver of the vehicle in relation to the steering wheel are determined using at least one optical reflection sensor device arranged on the steering wheel as an activation device, and
- the parameters which are determined in this way are passed on to the electronic safety system of the vehicle and influence, in particular in the event of a crash, the decision of the electronic safety system as to whether, and in what way, a steering wheel airbag and/or side airbags which are assigned to the driver of the vehicle are triggered.

## Revendications

1. Volant de direction (1) pour un véhicule automobile, comprenant :
- un corps de moyeu (10),
- une couronne de volant (11),
- au moins un rayon (12) pour fixer la couronne de volant (11) sur le corps de moyeu (10), et
- au moins un dispositif d'actionnement, agencé sur le corps de moyeu (10), sur la couronne de volant (11) ou sur le rayon (12), pour commander et/ou réguler un groupe structurel d'un véhicule automobile, le dispositif d'actionnement étant réalisé sous forme de dispositif capteur optique à réflexion, qui présente une surface fonctionnelle optique à réflexion (21) pour l'activation du dispositif capteur,
**caractérisé en ce que**
la surface fonctionnelle (21) est agencée dans un renfoncement dans le volant de direction (1).

2. Volant de direction selon la revendication 1, **caractérisé en ce que** le volant de direction (1) comprend une pluralité de dispositifs capteurs avec des surfaces fonctionnelles (21, 21', 21") optiques à réflexion, qui sont agencés sur la couronne de volant (11) et/ou sur les rayons (12) et/ou sur le corps de moyeu (10).

3. Volant de direction selon la revendication 1 ou 2, **caractérisé en ce que** la surface fonctionnelle (21, 21', 21") du dispositif capteur est agencée dans la couronne de volant (11) ou sur un rayon (12) de telle façon que le conducteur du véhicule atteint la surface fonctionnelle (21) avec le bout de l'un de ses doigts (30) sans devoir à cet effet enlever la main de la couronne de volant (11).

4. Volant de direction selon l'une des revendications 1 à 3, **caractérisé en ce qu'**un attouchement de la surface fonctionnelle (21, 21', 21") avec un bout du doigt (30) du conducteur du véhicule génère un signal de coupure ou d'enclenchement pour une fonction d'un groupe structurel du véhicule automobile.

5. Volant de direction selon l'une des revendications 2 à 4, **caractérisé en ce que** la surface fonctionnelle (21) comprend une zone de sommet (22) agencée dans la région la plus basse du renfoncement, ainsi qu'une première branche (23a) qui s'y raccorde sur un côté et une deuxième branche (23b) qui s'y raccorde de l'autre côté.

6. Volant de direction selon la revendication 5, **caractérisé en ce que** le dispositif capteur est réalisé de telle façon qu'un conducteur du véhicule, par attouchement de la surface fonctionnelle (21) dans la zone de sommet (22) avec un bout du doigt (30), active une fonction de commande et/ou de régulation d'un groupe structurel du véhicule automobile.

7. Volant de direction selon la revendication 6, **caractérisé en ce que** le dispositif capteur est réalisé de telle façon que le conducteur du véhicule, en déplaçant le bout du doigt (30), partant de la zone de sommet (22) vers la première branche (23a), génère un premier signal de commande et/ou de régulation d'un groupe structurel du véhicule automobile.

8. Volant de direction selon la revendication 7, **caractérisé en ce que** le dispositif capteur est réalisé de telle façon que le conducteur du véhicule, en déplaçant le bout du doigt (30), partant de la zone de sommet (22) vers la deuxième branche (23b), génère un deuxième signal de commande et/ou de régulation d'un groupe structurel du véhicule automobile.

9. Volant de direction selon l'une des revendications 5 à 8, **caractérisé en ce que** la première branche et la deuxième branche (23a, 23b) de la surface fonctionnelle (21) sont réalisées symétriques l'une par rapport à l'autre.

10. Volant de direction selon l'une des revendications 3 à 9, **caractérisé en ce que** la surface fonctionnelle (21) du dispositif capteur va en s'enfonçant dans une direction transversale à un plan défini par la couronne de volant (11).

11. Volant de direction selon la revendication 10, **caractérisé en ce que** la surface fonctionnelle (21) du dispositif capteur va en s'enfonçant sensiblement perpendiculairement au plan défini par la couronne de volant (11).

12. Volant de direction selon l'une des revendications 1 à 11, **caractérisé en ce que** la surface fonctionnelle (21) du dispositif capteur est agencée sur un relief (110) de la couronne de volant (11) qui fait saillie vers le corps de moyeu (10).

13. Volant de direction selon l'une des revendications 1 à 12, **caractérisé en ce que** la surface fonctionnelle (21) du dispositif capteur est agencée sur le volant (1), par référence à une position de circulation "tout droit" du volant (1), dans une région au-dessus d'un axe de rotation (D) défini par la couronne de volant (11).

14. Volant de direction selon la revendication 13, **caractérisé en ce que**, par référence à la position de circulation "tout droit" du volant (1), une surface fonctionnelle (21a) d'un deuxième dispositif capteur est agencée, symétriquement à la surface fonctionnelle (21) du dispositif capteur, dans la région au-dessus de l'axe de rotation (D) du volant.

15. Volant de direction selon l'une des revendications 2 à 14, **caractérisé en ce qu'**au moins un dispositif capteur comporte une surface fonctionnelle (21') étendue le long d'un axe d'extension (EA) et est agencé sur les rayons (12) et/ou sur le moyeu de volant (11), la taille de la surface fonctionnelle étendue (21') transversalement à l'axe d'extension (EA) étant conçu de telle façon qu'aucun mouvement important d'un bout du doigt (30) d'un conducteur du véhicule transversalement à la direction d'extension (EA) n'est possible.

16. Volant de direction selon la revendication 15, **caractérisé en ce qu'**une fonction de régulation pour un paramètre associé d'un groupe structurel du véhicule est susceptible d'être activée par approche et/ou par contact de la surface fonctionnelle étendue (21') par le bout d'un doigt (30) du conducteur du véhicule.

17. Volant de direction selon la revendication 16, **caractérisé en ce que** le paramètre associé du groupe structurel du véhicule peut être réglé en montant ou en descendant au moyen d'un mouvement du bout du doigt (30) dans une direction ou dans l'autre le long de la direction d'extension (EA).

18. Volant de direction selon la revendication 17, **caractérisé en ce que** le paramètre associé du groupe structurel du véhicule peut être sélectionné par commande vocale du conducteur du véhicule via un système de reconnaissance vocale intégré au véhicule.

19. Volant de direction selon la revendication 17 ou 18, **caractérisé en ce que** le paramètre associé est reconnaissable pour le conducteur du véhicule sur un affichage (24) agencé sur le volant de direction (1) ou dans la zone du tableau de bord, et/ou par émission vocale correspondante d'un système d'ordinateur de bord du véhicule automobile.

20. Volant de direction selon l'une des revendications 16 à 19, **caractérisé en ce que** le paramètre associé peut être sélectionné par mouvement du bout du doigt (30) sur une surface fonctionnelle (21"), d'un autre dispositif capteur, allongée le long de plusieurs axes d'extension (EA1, EA2).

21. Volant de direction selon la revendication 20, **caractérisé en ce que** le paramètre associé peut être sélectionné par un mouvement du bout du doigt (30) le long d'un deuxième axe d'extension (EA2) de la surface fonctionnelle allongée (21") et le réglage du paramètre associé sélectionné a lieu par un mouvement du bout du doigt (30) le long d'un premier axe d'extension (EA1) sensiblement perpendiculaire à celui-ci.

22. Volant de direction selon la revendication 20, **caractérisé en ce que** des paramètres associés à sélectionner sont reconnaissables optiquement pour le conducteur du véhicule sur un affichage de sélection (24') agencé sur le volant de direction ou dans la région du tableau de bord, le mouvement du bout du doigt (30) sur la surface fonctionnelle allongée (21") commandant un pointeur sur l'affichage de sélection (22'), et la sélection d'un paramètre associé désiré est possible par déplacement du pointeur jusqu'au paramètre associé désiré représenté sur l'affichage de sélection (24') et par attouchement successif de la surface fonctionnelle allongée (21").

23. Volant de direction selon l'une des revendications 2 à 22, **caractérisé en ce qu'**une pluralité de dispositifs capteurs avec des surfaces fonctionnelles (21) sont agencés sur la couronne de volant (11) et/ou sur les rayons (12) du volant de telle manière que les régions dans lesquelles un conducteur du véhicule touche ou prend le volant avec ses mains peuvent être détectées.

24. Procédé mis en oeuvre en utilisant un volant de direction selon l'une des revendications précédentes, comprenant les étapes suivantes :
- avec au moins un dispositif capteur optique à réflexion agencé sur le volant de direction à titre de dispositif d'actionnement, on détermine les paramètres que sont la distance et/ou la vitesse de rapprochement du torse du conducteur du véhicule par rapport au volant de direction,
- les paramètres ainsi déterminés sont transmis au système de sécurité électronique du véhicule et influencent, en particulier en cas de collision, la décision du système de sécurité électronique quant à savoir si et de quelle manière un coussin gonflable de volant et/ou un coussin gonflable latéral associé au conducteur du véhicule doit/doivent être déclenché(s).
